(19) Europäisches Patentamt
European Patent Office
Office européen des brevets

(11) **EP 3 084 688 B1**

(12) **EUROPEAN PATENT SPECIFICATION**

(45) Date of publication and mention
of the grant of the patent:
**11.07.2018 Bulletin 2018/28**

(51) Int Cl.:
***G06K 19/06*** *(2006.01)*

(21) Application number: **14872747.2**

(86) International application number:
**PCT/IB2014/066991**

(22) Date of filing: **17.12.2014**

(87) International publication number:
**WO 2015/092694 (25.06.2015 Gazette 2015/25)**

(54) **COMPOSITE INFORMATION BEARING DEVICES**

ZUSAMMENGESETZTE DATENTRÄGERVORRICHTUNGEN

DISPOSITIFS DE SUPPORT D'INFORMATIONS COMPOSITES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2013 HK 13113992**

(43) Date of publication of application:
**26.10.2016 Bulletin 2016/43**

(73) Proprietor: **Infotoo International Limited Kowloon, Hong Kong (CN)**

(72) Inventors:
• **LAM, Wing Hong Kowloon Hong Kong (CN)**
• **LAU, Tak Wai Hong Kong (CN)**

(74) Representative: **Abel & Imray Westpoint Building James Street West Bath BA1 2DA (GB)**

(56) References cited:
**EP-A2- 1 583 028      CN-A- 102 034 127 CN-A- 102 129 589**

## Description

### FIELD

The present disclosure relates to composite information bearing devices and applications thereof.

### BACKGROUND

Information bearing devices can be useful sources of information. An information bearing device may comprise human perceivable signs and/or human non-perceivable signs. Road signs, pictures of animals, national flags, words, alphanumeric characters, non-alphanumeric characters such as Asian or Arabic characters, are example of human perceivable signs. Barcodes, QR codes, scrambled codes, watermarks, and transform domain images are example of non-human perceivable signs.

The human culture is substantially founded on human readable signs, and human readable signs are primarily built of human readable symbols such as alphanumerical characters, non-alphanumerical characters, Latin or non-Latin characters, Asian characters, Greek, Arabic or Egyptian symbols, in ASCII, Unicode or otherwise, or a combination thereof.

While human readable signs provide useful information to the human reader, there are occasions where information is stored in information bearing devices comprising human non-perceivable signs. The use of human non-perceivable signs in information bearing devices may be to hide information from human readers, to facilitate machine reading of information, or a combination of both. For example, manufacturer's information or costing information of products may be hidden from the public by embedding them in a machine coded pattern alongside human perceivable information such as price, materials, products identification information, size, etc. on a tag attached to a product.

As image capturing devices capable of capturing digital images of a high image resolution are readily available due to the increasing popularity of smart phones, human non-perceivable signs in the form of machine coded images are increasingly useful for combating counterfeiting.

CN102129589 is acknowledged in the preamble of claim 1. The invention is set out in claims 1, 10 and 13.

### DESCRIPTION OF FIGURES

The present disclosure will be described by way of examples with reference to the accompanying Figures, in which:-

Figure 1A is a schematic diagram depicting an example composite information bearing device,

Figure 1B is a schematic diagram depicting another example composite information bearing device,

Figure 1C is a schematic diagram depicting another example composite information bearing device,

Figure 1D is a schematic diagram depicting another example composite information bearing device,

Figure 1E is a schematic diagram depicting another example composite information bearing device,

Figure 1F is a schematic diagram depicting another example composite information bearing device,

Figure 2A is a schematic diagram representation of data points on the Fourier plane which are embedded in the machine coded image pattern of Figures 1C and 1D,

Figure 2B is a schematic diagram representation of data points on the Fourier plane which are embedded in the machine coded image pattern of Figures 1E and 1F,

Figure 3A is a schematic diagram depicting another example composite information bearing device,

Figure 3B is a schematic diagram representation of data points on the Fourier plane which are embedded in the machine coded image pattern of Figure 3A,

Figure 4 is a schematic diagram depicting another example composite information bearing device,

Figure 5A is a schematic diagram depicting another example composite information bearing device,

Figure 5B is a schematic diagram depicting another example composite information bearing device,

Figure 6A is a schematic block diagram of an example apparatus for processing a composite information bearing device,

Figure 6B is a schematic block diagram of another example apparatus for processing a composite information bearing device,

Figures 7A to 7C are views depicting an example operation of an example apparatus on an example composite information bearing device,

Figures 8A to 8E are views depicting another example operation of an example apparatus on an example composite information bearing device,

Figures 9A to 9E are views depicting yet another example operation of an example apparatus on an example composite information bearing device, and

Figures 10A to 10E are images depicting example labels comprising example composite information bearing device and forming an aggregate according to the disclosure.

## DESCRIPTION

A composite information bearing device of the present disclosure comprises a composite of an image pattern and a human readable data device. The human readable data device comprises a set of human readable data symbols corresponding to a first set of data. The human readable data device that constitutes the first set of data may be divided into a first data portion and a second data portion. Human readable symbols herein includes alphanumerical characters, non-alphanumerical characters, Latin and non-Latin characters, Asian characters, Greek, Arabic or Egyptian symbols, in ASCII, Unicode, mathematical symbols, other signs or symbols that are human readable, and a combination thereof.
Each image pattern comprises a plurality of image defining elements which collectively define the image pattern. The image pattern is to correspond to or represent a second set of data, and the second set of data comprises a third data portion. The image pattern may be non-human perceivable. A human perceivable image pattern is one which conveys readable information to a human reader by human perception. National flags, shape of well-known figures, shape of known animals, shape of known articles or devices, etc. are example of human perceivable image patterns. A non-human perceivable image pattern is one which does not convey readable information to a human reader by human perception. An example of non-human perceivable image pattern is machine coded image pattern such as machine scrambled images or machine decomposed images of data. The machine coded images may be generated by steganography techniques such as transform domain techniques. Machine coded images are useful for application in information bearing devices since a machine coded image can be digitally processed for reversal to the data it represents through reversal operation of machines such as microprocessors.
The image pattern may comprise a machine coded image or a combination of machine coded images. The combination may be superposition or superimposition. Each of the machine coded image is machine readable and machines translatable into the data it represents through operations of processors such as microprocessors on the machine coded image by a reversal process.
Each of the machine coded image may correspond to or may correlate to the data it represents by a scheme of operation such as a scheme of steganography. The scheme of steganography may be a scheme of machine or processor operation. The scheme of steganography is to operate to decompose or break a data symbol into a plurality of image defining elements which are distributed, scattered or spread within a boundary of the machine coded image to collectively define the image pattern. The data is to be recovered or recomposed through reversal operation of the scheme of steganography on the image pattern, for example through reversal operation of the plurality of image defining elements of the image pattern. Example schemes of steganography which have the above properties include schemes of mathematical operation based on transform domain techniques.
Where the image pattern is a digital image represented or representable by a total of N x M pattern defining elements, where N and M are integer numbers, a processor is to process the N x M pattern defining elements to compose or recomposes the data to which the image pattern correlates. In some embodiments, the image pattern is represented or for representation in a matrix comprising of N x M pattern defining elements arranged in N rows and M columns. For most mobile applications, an image pattern having $N \leq 500$ and $M \leq 500$ would be sufficient. The image pattern may be arranged as a square matrix of pixels such that N=M, for example N=M=377 for a smartphone with a 5-megapixel camera.

Where the image pattern is a matrix of N row and M columns, there will be a total of N x M number of image defining elements. The image defining elements are distributed within the boundary of the image in a scrambled or spread around manner to collectively define a third data portion.

In some embodiments, the image pattern is to represent a check code. A check code is also referred to herein as a verification code. A check code or a verification code herein may comprise a verification data or a set of verification data where appropriate. In those embodiments, the third data portion represented by the image pattern is to correspond to or represent a check code. The check code may be represented by an n-bit binary data as a convenient example. The n-bit binary data representation means that the check code can be one of $2^n$ possibilities.

In some embodiments, the image pattern is to represent part of target data such as an identification code. The image pattern may be represented by an n-bit binary data as a convenient example. The n-bit binary data representation means that the target data can be one of $2^n$ possibilities.

As image patterns corresponding to machine coded image patterns may represent many possibilities of coded or encrypted data or messages, composite information bearing devices comprising such image patterns are useful to facilitate the formation of coded identification devices.

Currently, machine coded image patterns having very fine and complicated details packed at a very high density are applied on labels or tags to form tools against counterfeiting. Such machine coded image patterns are usually applied on the labels or tags by offset printing and rotary machine printing. The use of off-set printing technology would mean that a master pattern of very high precision has to be engraved on a zinc plate for subsequent transfer to a sheet of medium on which the pattern is to reside. Likewise, the use of rotary machine printing would mean that a master pattern of very high precision has to be embedded on a cylindrical plate for subsequent transfer to a roll of medium on which the pattern is to reside. The requirement of such a pre-patterned plate to form a machine coded image pattern would mean that labels or tags bearing such machine coded image patterns would not be suitable for use in applications where a large number of identification means each having an individual or unique identity is required. While such image patterns can of course be made by other high precision image formation methods or machines, the overheads, whether time, costs, or otherwise, associated with the making of such image patterns make it less attractive for large scale applications such as for application in consumer goods.

Where a single machine coded image pattern is to form an identification part or identification portion of a plurality of composite information bearing devices such that each of the composite information bearing devices is to have a unique or distinct identity, the costs or overheads associated with the production of each such composite information bearing devices can be substantially reduced due to costs sharing or splitting. The cost benefits will be more apparent when the number of distinctive composite information bearing devices having a same machine coded image pattern increases.

Moreover, a large number of distinctive composite information bearing devices sharing a single or common machine coded image pattern which forms an identification part or portion of the composite information bearing device would facilitate the use of template matching for more expedient detection and determination of the common machine coded image pattern. Templates of such machine coded image patterns may be pre-stored and retrieved by a processor for subsequent detection or verification of a target machine coded image pattern.

The identity of a composite information bearing device may comprise an identification code and a verification code for verifying the identification code. The common machine coded image pattern may form part of the identification code, for example, a more or the most significant portion of the identification code. The common machine coded image pattern may form part of the verification code, for example, a more or the most significant portion of the verification code without loss of generality. At a minimum, the composite information bearing devices of the present disclosure provides the public with a useful choice.

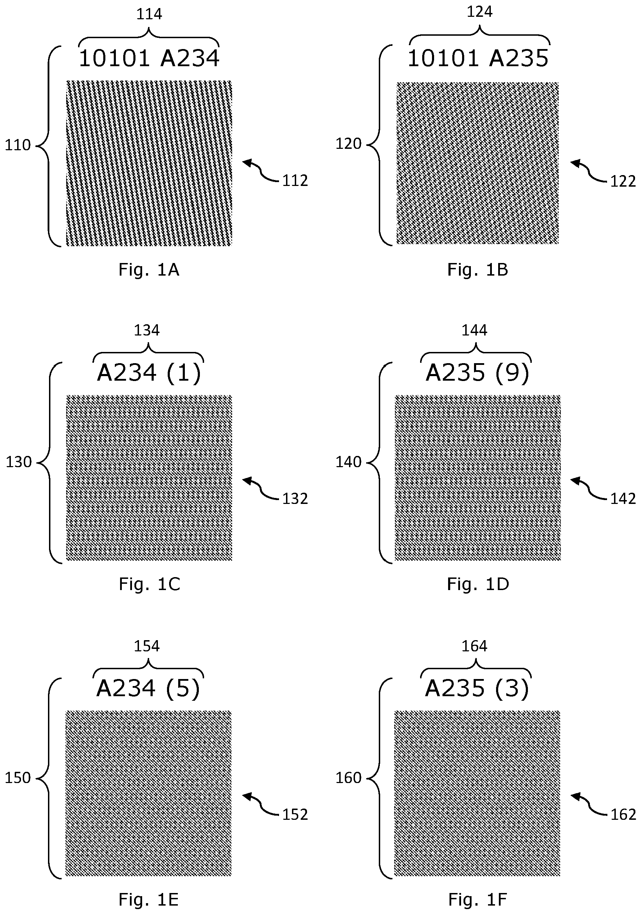

An example composite information bearing device **110** depicted in Figure 1A comprises a machine coded image pattern **112** and a human readable data device **114**. The image pattern **112** represents a check digit "1". The human readable device **114** comprises a string of alphanumerical characters "10101 A234".

An example composite information bearing device **120** depicted in Figure 1B comprises a machine coded image pattern **122** and a human readable data device **124**. The image pattern **122** represents a check code "9". The human readable device **124** comprises a string of alphanumerical characters "10101 A235". For the avoidance of doubt, the composite information bearing devices **110**, **120** of Figures 1A and 1B do not form part of the invention but represent background art that is useful for understanding the invention.

An example composite information bearing device **130** depicted in Figure 1C comprises a machine coded image pattern **132** and a human readable data device **134**. The image pattern **132** represents a binary data string "10101". The human readable device **134** comprises a string of alphanumerical characters "A234 (1)".

An example composite information bearing device **140** depicted in Figure 1D comprises a machine coded image pattern **142** and a human readable data device **144**. The image pattern **142** represents a binary data string "10101". The human readable device **144** comprises a string of alphanumerical characters "A235 (9)".

An example composite information bearing device **150** depicted in Figure 1E comprises a machine coded image pattern **152** and a human readable data device **154**. The image pattern **152** represents a binary data string "11111". The human readable device **154** comprises a string of alphanumerical characters "A234 (5)".

An example composite information bearing device **160** depicted in Figure 1F comprises a machine coded image pattern **162** and a human readable data device **164**. The image pattern **162** represents a binary data string "11111". The human readable device **164** comprises a string of alphanumerical characters "A235 (3)".

In each of the example composite information bearing devices of Figures 1A to 1F, the human readable data device of each device is to represent a first set of data and the machine coded image pattern is designed to represent a second set of data. The first and second sets of data are to define a set of data comprising a target data and a verification data for verifying the target data.

In the example of Figure 1A, the alphanumerical characters "10101 A234" of the human readable device **114** is a target data while the check digit "1" is a verification data.

In the example of Figure 1B, the alphanumerical characters "10101 A235" of the human readable device **124** is a target data while the check digit "9" is a verification data.

The target data is a variable and may represent a serial number, identification number, or other identification means.

In the example of Figure 1C, a portion of the human readable device **134**, namely, the leading portion "A234" of the alphanumerical string represents a first portion of a target data. Another portion of the human readable device **134**, namely (1), is a verification data representing a check digit "1". The machine coded image pattern **132** is to represent a binary data string "10101" and this binary data string forms a second portion of the target data. The complete target data "10101 A234" is a combination of the first and second portions of the target data by concatenation.

In the example of Figure 1D, a portion of the human readable device **144**, namely, the leading portion "A235" of the alphanumerical string represents a first portion of a target data. Another portion of the human readable device **144**, namely (9), is a verification data representing a check digit "9". The machine coded image pattern **142** is to represent a binary data string "10101" and this binary data string forms a second portion of the target data. The complete target data "10101 A235" is a combination of the first and second portions of the target data by concatenation.

It will be noted that the machine code images **132** and **142** of Figures 1C and 1D are the same and are to represent the same target data portion.

Similar to that of Figures 1C and 1D, the composite devices of Figures 1E and 1F are arranged such that the machine coded image pattern **152**, **162** represents the leading portion of the target data, the leading portion of the human readable device **154**, **164** represents a trailing portion of the target data, and the trailing portion of the human readable device **154**, **164** represents the verification data. In the examples depicted in Figures 1E and 1F, the leading portion of the target data as represented by the same coded image pattern **152**, **162** is the same and equals "11111". The trailing portion of the target data of Figure 1E is A234, the complete target data is 11111 A234, and the verification data is 5. The trailing portion of the target data of Figure 1F is A235, the complete target data is 11111 A235, and the verification data is 3.

In the example of 1C, 1D, 1E &1F, the data represented by the machine coded image pattern forms part of the target data or part of the identification code. This arrangement means that the same machine coded image can form part of a plurality of composite information bearing devices, with each composite information bearing device having its own or unique identity. Such an arrangement is advantageous since it facilitates the use of more sophisticated machine coded image patterns with a higher degree of complexity can be generated with a higher degree of resolution for multiple uses.

For the sake of completeness, the example relationship between the complete target data and the verification data may be by a scheme of operation, such as a scheme of computational operation by way of an example hash map as below.

| Based on Luhn Algorithm | | Based on Arbitrary Hashing | |
|---|---|---|---|
| string | Check code | string | Check code |
| 10101A234 | 1 | A123456 | 3 |
| 10101A235 | 9 | A123457 | 3 |
| 11111A234 | 5 | A123410101 | 4 |
| 11111A235 | 3 | 11111B235 | 2F |
| 111118239 | 5 | 10101246813 | 567 |
| ... | ... | ... | ... |

(continued)

| Based on Luhn Algorithm | | Based on Arbitrary Hashing | |
|---|---|---|---|
| string | Check code | string | Check code |
| Table 1 | | | |

A hash map provides convenient on-line access as the database of hash maps can be conveniently generated on-line. In some embodiments, the check code may be a set of verification data which is generated by other schemes of operations such as the Luhn algorithm (a.k.a. modulus 10) or a hash-based message authentication code.

An example verification data generated by the Luhn algorithm using a semantic symbol containing the data string of 10101 A234 of the device 114 is depicted in the table below:

| Semantic Symbol | Value | Position Weight | Weighted Value |
|---|---|---|---|
| 1 | 1 | 10 | 1*10=10 |
| 0 | 0 | 9 | 0*9=0 |
| 1 | 1 | 8 | 1*8=8 |
| 0 | 0 | 7 | 0*7=0 |
| 1 | 1 | 6 | 1*6=6 |
| A | 10 | 5 | 10*5=50 |
| 2 | 2 | 4 | 2*4=8 |
| 3 | 3 | 3 | 3*3=9 |
| 4 | 4 | 2 | 4*2=8 |

| Q | Q | 1 | Q*1=Q |
|---|---|---|---|
| Sum of weighted value of all the semantic symbols=99+Q; | | | |
| Table 2 | | | |

Assuming that a modulus 10 scheme is used, the check code Q generated with reference to the total weighted sum (99+Q) is given by (99+Q) mod 10=0 operation, which would mean the check code Q having a value of 1.

As the image pattern of a composite information bearing device is devised to represent a set of information bearing data, each image pattern is characteristic of the information data it represents. Therefore, the image pattern of a composite information bearing device is also a signature pattern or a unique corresponding pattern of the information data it represents.

Digital steganographic techniques such as transform domain techniques are useful tools for generating signature image patterns or unique corresponding image patterns in a systematic manner. Digital steganographic techniques such as digital steganography of images are capable of hiding or encoding data in an image pattern by a scheme of steganography such as a scheme of mathematical operation or a scheme of computational operation. The capability to hide or encode data in an image pattern by a scheme of steganography is useful for generating signature image patterns or unique corresponding image patterns since the hidden or encoded data can be recovered by machine decoding through a reversal of the scheme of encoding or hiding operations.

Example transform domain techniques that are useful to hide data in an image pattern include those that can operate to decompose or spread a single data symbol into a plurality of image defining elements of an image pattern, and to recover or re-compose the hidden data through a scheme of reversal operation. In the present context, the term 'hide data' and its literal equivalent terms such as 'hiding data' or 'hidden data' shall be given corresponding equivalent meanings to the term 'encode data' and its literal equivalent terms such as 'encoding data', 'encoded data' where the context allows or permits. Fourier Transform, Bessel Transform, Cosine Transform are examples of such transform domain techniques. Where the image patterns are digital images, discrete forms of such transform domain techniques such as Discrete Fourier Transform (DFT), Fast Fourier Transform (FFT), Discrete Bessel Transform, Discrete Cosine Transform, etc. would be especially useful.

For an image having an image size of N x M pixels in the spatial domain, where N is the number of rows and M is the number of pixels in a row or the number of columns, an image defining element $f(x,y)$ is related to the data points $F(u,v)$ in the Fourier domain as follows:

$$f(x,y) = T^{-1}\big(F(u,v)\big) = \sum_{u=-N/2}^{\frac{N}{2}-1} \sum_{v=-M/2}^{\frac{M}{2}-1} F(u,v)\,exp\left(-\frac{j2\pi ux}{N}\right)exp\left(-\frac{j2\pi vy}{M}\right),$$

and

$$F(u,v) = \frac{1}{MN}\sum_{x=-N/2}^{\frac{N}{2}-1} \sum_{y=-M/2}^{\frac{M}{2}-1} f(x,y)\,exp\left(\frac{j2\pi ux}{N}\right)exp\left(\frac{j2\pi vy}{M}\right).$$

For the example composite information bearing devices of Figures 1C to 1F, the image pattern is required to represent a data which consists of 5 binary digits. In order that a signature image pattern is provided for each of the 31 (that is, $2^5$-1) possibilities, 31 signature image patterns are required and Discrete Fourier Transform is used as an example transform domain technique to devise the signature image patterns. The all-zero data "00000" is not utilized in this example as this corresponds to a null image. For other coding schemes or where appropriate, an all-zero data may be useful.

Where an image is a machine encoded image pattern (represented by $f(x,y)$) corresponding to one that is due to transform domain operation on a data symbol comprising a plurality of data points, the image may be represented as follows:

$$f(x,y) = T^{-1}\big(F(u,v)\big) = T^{-1}\big(p1(u,v) + p2(u,v) + \cdots + pn(u,v)\big)$$

where p1, p2, ...,pn are the data points forming the data symbol.

Where the machine encoded image pattern image is due to linear superimposition of image patterns due to transform domain operation on the individual data points, the machine encoded image pattern may also be represented as follows:

$$f(x,y) = T^{-1}\big(p1(u,v)\big) + T^{-1}\big(p2(u,v)\big) + \cdots + T^{-1}\big(pn(u,v)\big)$$

Fourier Transform and Bessel Transform are examples of such transform domain operations.

5 data points are selected on the Fourier plane to represent these 5 binary data bits. The 5 data bits are designated as (p5, p4, p3, p2, p1), where p5 is the most significant bit and p1 is the least significant bit. The binary data string values represented by these 5 data bits are as follows:

| P5 | P4 | P3 | P2 | P1 | "value" | P5 | P4 | P3 | P2 | P1 | "value" |
|----|----|----|----|----|---------|----|----|----|----|----|---------|
| 0 | 0 | 0 | 0 | 1 | 1 | 1 | 0 | 0 | 0 | 0 | 16 |
| 0 | 0 | 0 | 1 | 0 | 2 | 1 | 0 | 0 | 0 | 1 | 17 |
| 0 | 0 | 0 | 1 | 1 | 3 | 1 | 0 | 0 | 1 | 0 | 18 |
| 0 | 0 | 1 | 0 | 0 | 4 | 1 | 0 | 0 | 1 | 1 | 19 |
| 0 | 0 | 1 | 0 | 1 | 5 | 1 | 0 | 1 | 0 | 0 | 20 |
| 0 | 0 | 1 | 1 | 0 | 6 | 1 | 0 | 1 | 0 | 1 | 21 |
| 0 | 0 | 1 | 1 | 1 | 7 | 1 | 0 | 1 | 1 | 0 | 22 |
| 0 | 1 | 0 | 0 | 0 | 8 | . | . | . | . | . | . |
| 0 | 1 | 0 | 0 | 1 | 9 | . | . | . | . | . | . |
| 0 | 1 | 0 | 1 | 0 | 10 | . | . | . | . | . | . |
| . | . | . | . | . | . | 1 | 1 | 1 | 0 | 1 | 29 |
| . | . | . | . | . | . | 1 | 1 | 1 | 1 | 0 | 30 |
| . | . | . | . | . | . | 1 | 1 | 1 | 1 | 1 | 31 |

On the Fourier plane, the 5 binary data points are distributed with the following (u,v) coordinates as a convenient example and each of the data points has a value of "0" or "1" or, alternatively, "ON" or "Off":

|    | u | v |
|----|----|----|
| P1 | 34 | 6 |
| P2 | 22 | 27 |
| P3 | 0 | 35 |
| P4 | -22 | 27 |
| P5 | -34 | 6 |

The 5 example binary data points above have the following transform domain functions:

$$p1(u,v) = \begin{cases} 1, & u = 34 \text{ and } v = 6 \\ 0, & otherwise \end{cases}$$

$$p2(u,v) = \begin{cases} 1, & u = 22 \text{ and } v = 27 \\ 0, & otherwise \end{cases}$$

$$p3(u,v) = \begin{cases} 1, & u = 0 \text{ and } v = 35 \\ 0, & otherwise \end{cases}$$

$$p4(u,v) = \begin{cases} 1, & u = -22 \text{ and } v = 27 \\ 0, & otherwise \end{cases}$$

$$p5(u,v) = \begin{cases} 1, & u = -34 \text{ and } v = 6 \\ 0, & otherwise \end{cases}$$

For the composite information bearing device **110** of Figure 1A, the image pattern is a machine coded image pattern **112** which is coded by Fourier Transform operation on the binary data check code. The binary data check code has the representative value "1", or the value (0,0,0,0,1) when represented in the 5-binary bit data format (p5, p4, p3, p2, p1). As all the p values are zero or "OFF" except for p1 which is "1" or "ON", the image pattern is that due solely to p1 and has the following representation:

$$f(x,y) = T^{-1}\big(F(u,v)\big) = T^{-1}\big(p1(u,v)\big)$$

For the composite information bearing device **120** of Figure 1B, the image pattern is a machine coded image pattern **122** which is coded by Fourier Transform operation on the binary data check code. The binary data check code has the representative value "9", or the value (0,1,0,0,1) when represented in the 5-binary bit data format (p5, p4, p3, p2, p1). As all the p values are zero except for p1 and p4, the image pattern is that due to superimposition of p1 and p4 and has the following representation:

$$f(x,y) = T^{-1}\big(F(u,v)\big) = T^{-1}\big(p1(u,v) + p4(u,v)\big)$$

Where the image pattern is a linear superimposition of image patterns of the constituting data points reflecting properties of the transform domain operation, the resultant image pattern is also representable as follows:-

$$f(x,y) = T^{-1}\big(p1(u,v)\big) + T^{-1}\big(p4(u,v)\big)$$

For the composite information bearing device **130** of Figure 1C, the image pattern is a machine coded image pattern **132** which is coded by Fourier Transform operation on the binary data. The binary data has the representative value "21", or the value (1,0,1,0,1) when represented in the 5-binary bit data format (p5, p4, p3, p2, p1). As all the p values are zero or "OFF" except for p1, p3 and p5, the image pattern is that due to superimposition of p1 , p3 and p5 and has the following representation:

$$f(x,y) = T^{-1}\big(F(u,v)\big) = T^{-1}\big(p1(u,v) + p3(u,v) + p5(u,v)\big)$$

Where the image pattern is a linear superimposition of image patterns of the constituting data points reflecting properties of the transform domain operation, the resultant image pattern is also representable as follows:-

$$f(x,y) = T^{-1}\big(p1(u,v)\big) + T^{-1}\big(p3(u,v)\big) + T^{-1}\big(p5(u,v)\big)$$

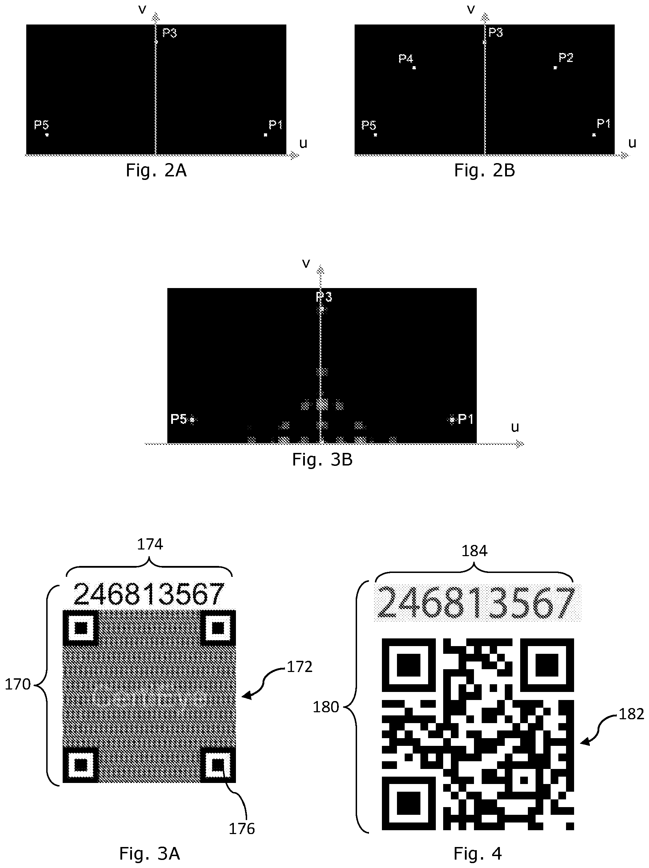

For the composite information bearing device **140** of Figure 1D, the machine coded image pattern **142** is identical to that of the machine coded image pattern **132** and the description will apply mutatis mutandis. A representation of the 5-binary bit data format (p5, p4, p3, p2, p1) of the machine coded image pattern **132**,**142** on the Fourier plane as signal points is depicted in Figure 2A.

For the composite information bearing device **150** of Figure 1E, the image pattern is a machine coded image pattern **152** which is coded by Fourier Transform operation on the binary data. The binary data has the representative value "31", or the value (1,1,1,1,1) when represented in the 5-binary bit data format (p5, p4, p3, p2, p1). As all the p values are "1" or "ON", the image pattern is that due to superimposition of all of p1, p2, p3, p4 and p5 and has the following representation:

$$f(x,y) = T^{-1}\big(p1(u,v) + p2(u,v) + p3(u,v) + p4(u,v) + p5(u,v)\big)$$

Where the image pattern is a linear superimposition of image patterns of the constituting data points due to properties of the transform domain operation, the resultant image pattern is also representable as follows:-

$$f(x,y) =$$

$$T^{-1}\big(p1(u,v)\big) + T^{-1}\big(p2(u,v)\big) + T^{-1}\big(p3(u,v)\big) + T^{-1}\big(p4(u,v)\big) + T^{-1}\big(p5(u,v)\big)$$

For the composite information bearing device **160** of Figure 1F, the machine coded image pattern **162** is identical to that of the machine coded image pattern **152** and the description will apply mutatis mutandis.

A representation of the 5-binary bit data format (p5, p4, p3, p2, p1) of the machine coded image pattern **152,162** on the Fourier plane as signal points is depicted in Figure 2B.

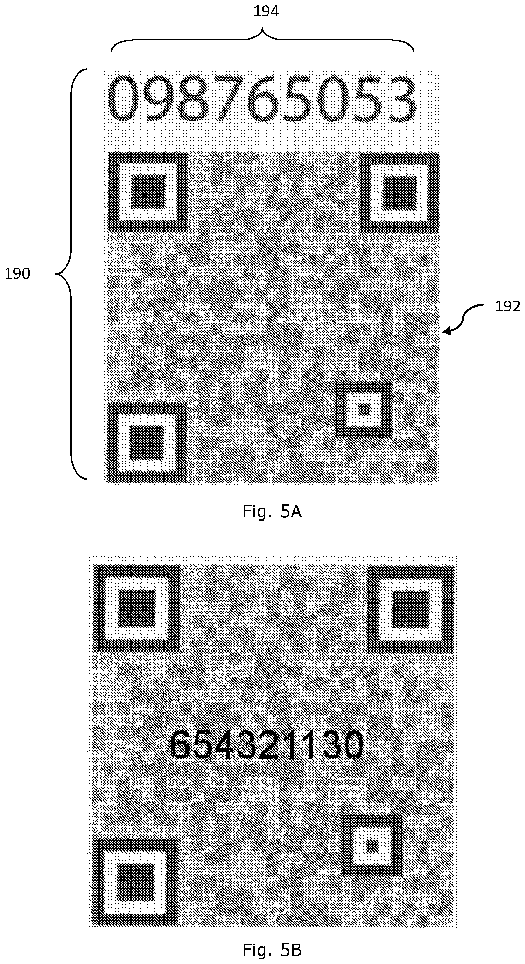

In the examples of Figures 1A to 1F, 5 data points, namely, p1-p5 have been selected to provide $2^5$-1 possibilities. It will be appreciated that the number of data points, n, can be increased or decreased according to actual requirements without loss of generality.

A composite information bearing device **170** depicted in Figure 3A comprises a machine coded image pattern **172** and a human readable device **174**. The human readable device **174** comprises an example alphanumeric data string "246813567". The first data portion of the human readable device **174** "246813" forms a complete target data "10101 246813" when combines with the data value "10101" represented by the coded image pattern **172** and the second data portion of the human readable device **174** "567" forms the verification data "567". In addition to the machine coded image pattern **172** and the human readable device **174**, this composite information bearing device **170** also comprises an alignment guide and a watermark "CertiEye". The alignment guide is integrally formed on the composite information bearing device **170** to provide alignment assistance when an image of the composite information bearing device **170** is to be captured for analysis. The alignment guide comprises alignment devices **176** which are distributed on far corners of the machine coded image pattern **172**. The alignment devices **176** are spaced apart and are distributed to provide dimensional and/or positional reference for alignment with counterpart alignment devices on a corresponding alignment guide of an image capturing apparatus for capturing an image of the composite information bearing device for computational processing. Each of the alignment devices is to cooperate with a counterpart alignment device to appear on an image viewer of an image capturing apparatus when an image of the composite information bearing device **170** is to be captured for machine processing. Each alignment device comprises alignment features having complementary properties and the complementary features are to be matched with corresponding complementary features on the image viewer of the image capturing apparatus. The image viewer typically comprises an LCD screen. The machine coded image pattern **172** is represented by 5 binary-bit data points which are depicted in Figure 3B. The other image components such as the alignment guide and the watermark "CertiEye" appears as noise in the background as they do not have a high frequency component as those of the 5 binary-bit data points. In addition, the machine coded image pattern **172** is distributed within the boundary of the information bearing device **170** and between adjacent alignment devices **176.**

A composite information bearing device **180** depicted in Figure 4 comprises a machine coded image pattern **182** and a human readable device **184.** The machine coded image pattern **182** is coded in a format which is known as a "QR" code and contains the binary data string "10101". The human readable device **184** comprises an example alphanumeric data string "246813567". The first data portion of the human readable device **184** "246813" forms a complete target data "10101 246813" when combines with the data value "10101" represented by the coded image pattern **182** and the second data portion of the human readable device **184** "567" forms the verification data "567". The composite information bearing device **180** may represent a string of information such as "www.iil.me/-10101xxxx, where "10101" is the contained binary data.

A composite information bearing device **190** depicted in Figure 5A comprises a machine coded image pattern **192** and a human readable device **194**. The human readable device **194** comprises an example alphanumeric data string "098765053". The machine coded image pattern **192** is a composite image comprising a QR code and an image formed by transform domain operation in superimposition. The information contained in the QR code may provide an address while the information embedded in the transform domain image may comprise authentication data for verifying authenticity of the device.

In some embodiments, the human readable device may be superimposed onto or merged into the machine coded image pattern as depicted for example in Figure 5B. Due to the distribution of the finely divided image defining elements around the machine code image, the human readable device remains perceivable to human readers after the superimposition. In some embodiments, for the human readable device, the first data portion may be placed in front of the second data portion, or the second data portion may be placed in front of the first data portion, or the two data portions may be merged together. In some embodiments, the human readable device may be placed anywhere outside and/or inside the machine coded image pattern.

Therefore, composite information bearing devices each comprising a machine coded image pattern have been described.

In some embodiments, the machine coded image pattern is to represent a portion of a target data, and another portion of the target data is represented by one of said first data portion or said second data portion of the human readable data device.

The portion of target data represented by the machine coded image pattern may form the more significant portion of the target data. The portion of the target data represented by the human readable data device may comprise the less significant portion of the target data. The data portion of the human readable data device not representing the target data may represent the verification code. The verification code is related to the target data by a predetermined scheme of operation such that the verification code can be used to verify the target data. The target data may be used as an identification code to provide a unique identity or identification code for each composite information bearing device.

For example, in the background composite information bearing devices depicted in Figures 1A and 1B, the machine coded image pattern is to represent authentication data to facilitate verification of target data represented by the human readable device.

In some embodiments, for example, those depicted in Figures 1C to 1F, the machine coded image pattern is to represent a portion of target data and this portion of the target data is to combine with another portion of the target data represented by a portion of the human readable device to form a complete target data. The other portion of the human readable device not representing a portion of the target device may comprise data representing verification data for verifying the target data.

In some embodiments, the machine coded image pattern may represent the target data and the human readable device may represent verification or authentication data.

In some embodiments, the machine coded image pattern may represent verification or authentication data and the human readable device may represent the target data.

A target data may be an identification or serial number, such as identification number on travel documents, or serial number of goods, articles, products, or services.

Composite information bearing devices may be applied on goods, articles, products, or live objects such as animals or human beings for tracking.

Where the machine coded image pattern is to represent a portion of the target data, a single machine coded image pattern can be used to compose many different composite information bearing devices representing many different serial or identification codes or numbers.

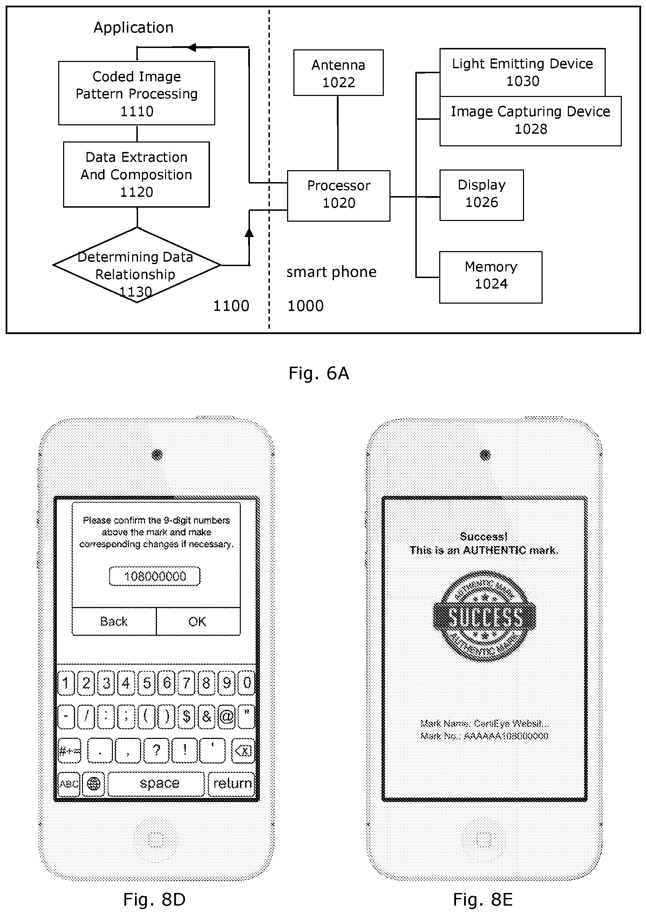

Figure 6A depicts a functional block diagram of an apparatus **1000** for capturing and processing a composite information bearing device. The apparatus **1000** comprises a processor **1020**, an antenna **1022**, a memory **1024**, a display **1026**, an image capturing device **1028** and a light emitting device **1030**. The apparatus 1000 has a hardware arrangement that is the same as a smart mobile phone. The antenna **1022** is to provide a communication interface to facilitate data communication between the apparatus **1000** and an external telecommunication network. The processor **1020** is operable to load and execute an application program. Upon execution of the application program, the processor will generate alignment devices on the display and guide a user to align the apparatus with a target composite information bearing device. When the target composite information bearing device shown on the display screen is aligned with the alignment devices, the processor will operate the image capturing device **1028** to capture an image of the target composite information bearing device. After an image of the target composite information bearing device has been captured, the image will be stored in the memory, and the processor will identify the target data and the verification data. Next the processor will operate to determine the relationship between the target data and the verification data, and to provide an outcome of relationship determination. Where the verification is for verifying the target data, the processor will generate an outcome to inform a user whether the verification is successful.

In an example execution of an application program as depicted in **1100** of Figure 6A, the processor is to process the machine coded image pattern at **1110** to retrieve a set of data. The process may be by reverse Fourier Transform where the data was coded by Fourier Transform, or by reverse Bessel Transform when the data was coded by Bessel Transform. The processor will extract data symbols represented by the human readable data device by optical character recognition at **1120** and construct an identification code and a verification code. The processor will then determine relationship between the identification code and the verification code thus constructed and generate an outcome of relationship determination on the display **1026** at **1130**. The outcome will be positive if the relationship between the identification code and the verification code is according to a predetermined relationship. The outcome will be negative if the relationship between the identification code and the verification code is not according to the predetermined relationship.

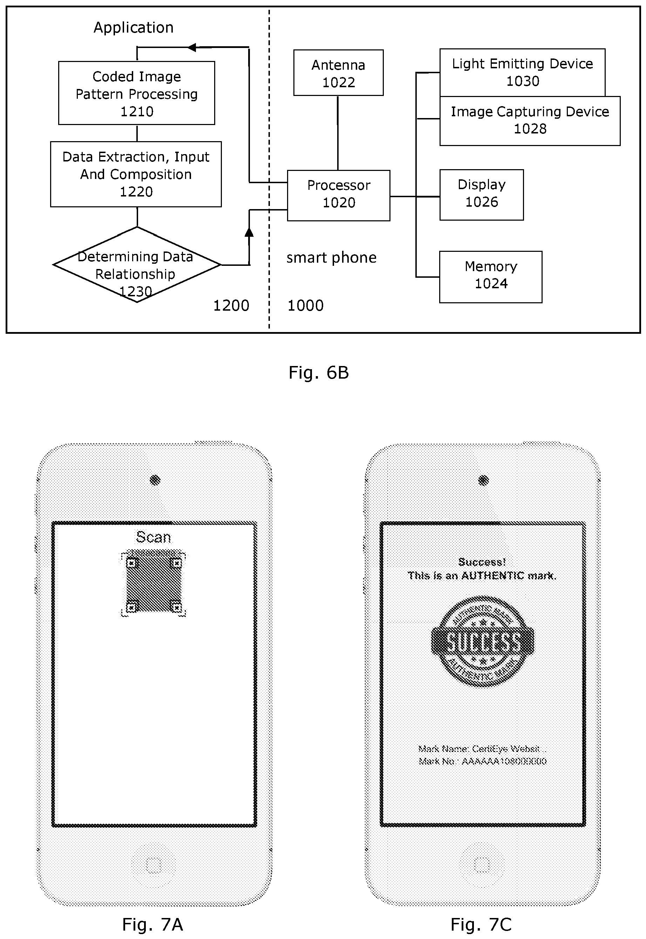

In an example execution of an application program as depicted in **1200** of Figure 6B, the processor is to process the machine coded image pattern at **1210** to retrieve a set of data. The process may be by reverse Fourier Transform where the data was coded by Fourier Transform or by reverse Bessel Transform when the data was coded by Bessel Transform. The processor will obtain data symbols or some of the data symbols represented by the human readable data device by user input at a user input interface at **1220**. The processor may extract some of the data symbols represented by the human readable data device by optical character recognition ('OCR') to recompose the identification code and the verification code at **1220**. In some embodiments, the first data portion forming part of the target data may be extracted by OCR while the second data portion forming the verification code may be obtained by user input. In some embodiments, the first data portion forming part of the target data may be extracted by user input while the second data portion forming the verification code may be obtained by OCR. The processor will then determine relationship between the identification code and the verification code thus constructed and generate an outcome of relationship determination on the display **1026** at **1230.**

In some embodiments, the first data portion forming part of the target data may be extracted by user input and the second data portion forming the verification code may also be obtained by user input. In some embodiments, the first data portion forming part of the target data may be extracted by OCR or other automated means while the second data portion forming the verification code may also be obtained by OCR.

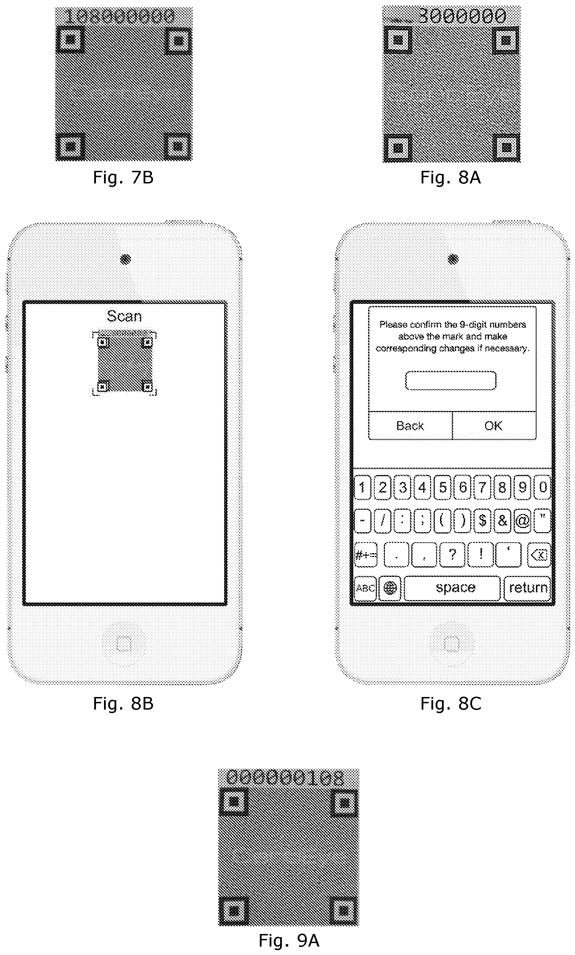

Figures 7A to 7C depict example operations using the apparatus **1000** to process a composite information bearing device of Figure 7B. Initially, an application program **1100** is stored on the apparatus **1000**. When the processor **1020** executes the application program **1100**, an application screen will be displayed on the display **1026** and this application screen includes an alignment guide comprising a plurality of alignment devices on an alignment window. The alignment devices generated by the application program is for complementary alignment with the alignment devices on the composite information bearing device and includes four alignment devices which are distributed at four corners of the alignment window. After the alignment devices on the apparatus are aligned with the counterpart alignment devices on the composite information bearing device, the processor is to operate the image capturing device to capture an aligned image of the composite information bearing device. When desirable, the processor may optionally operate the light emitting device **1030** to provide illumination to the composite information bearing device. After the image of the composite information bearing device has been captured, the processor will recompose the target code and the verification code at **1120**, and to generate a screen display signifying successful verification at **1130** as shown in Figure 7C.

In an execution example of the application program **1200**, a composite information bearing device of Figure 8A is to be captured and processed. The leading portion "108" of the human readable data device of this composite information bearing device is not detected during the process (as the portion is temporarily covered). Upon execution of the application program **1200** after capturing and analyzing an image of the composite information bearing device as shown in Figure 8B, the processor determines that the outcome of relationship determination is negative at **1230**; hence, the processor will then generate a window to invite a user to input the data symbols "108000000" represented by the human readable data device as shown in Figures 8C and 8D. If the correct string of data symbols is inputted, the processor will generate a screen display signifying successful verification at **1230** and shown in Figure 8E.

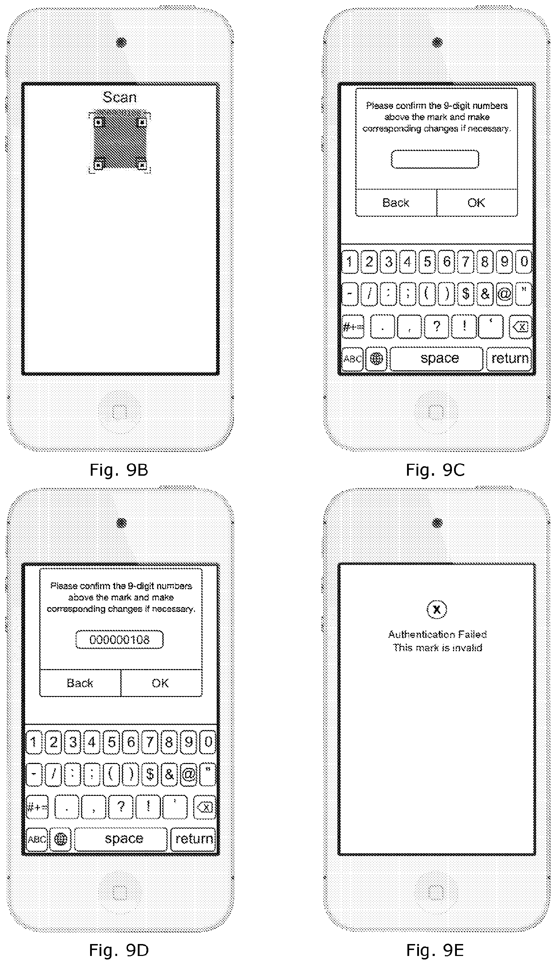

In an execution example of the application program **1200**, a composite information bearing device of Figure 9A is to be captured and processed. The human readable data device of this composite information bearing device comprises an incorrect string of data symbols "000000108" instead of the correct string of data symbols "108000000". Upon execution of the application program **1200** as depicted in Figure 9B, an image of the composite information bearing device will be captured and the data represented by the machine coded image pattern will be recovered. The processor will generate a window to invite a user to input the data symbols through a user input interface as depicted in Figures 9C and 9D. A negative outcome message is generated at **1230** and displayed as shown in Figure 9E signifying that the verification code is incorrect.

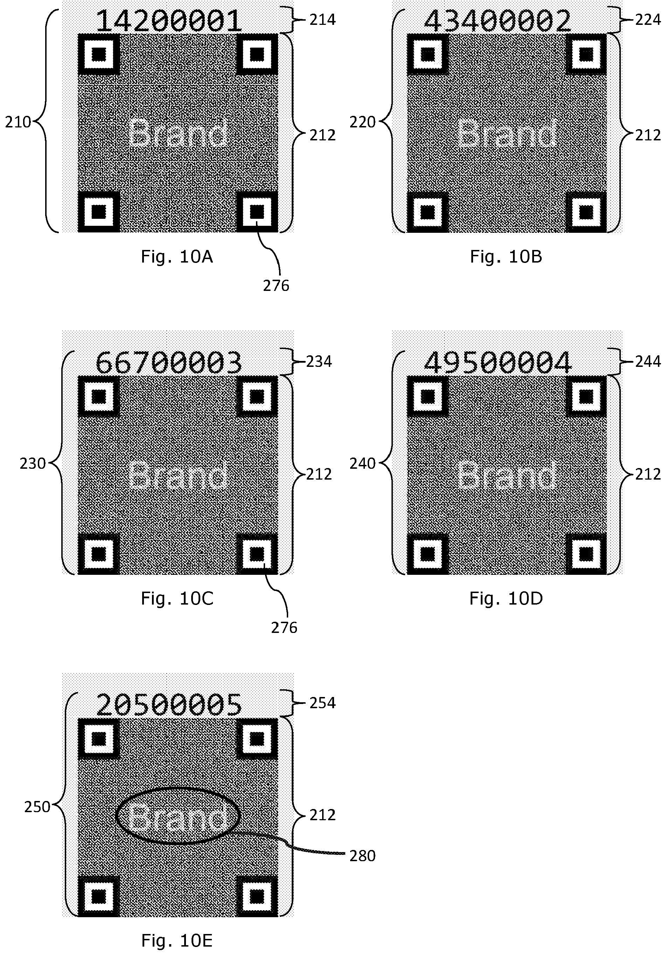

Figures 10A to 10E depicts example labels which are for attaching to clothing or apparel items. The labels may be imprinted on a carrying medium such as fabric materials, paper, or plastics. Each example label comprises a composite information bearing device **210**, **220**, **230**, **240**, **250** including a human readable data device **214**, **224**, **234**, **244**, **254**, a machine coded image pattern **212** and an alignment guide. Each human readable data device **214**, **224**, **234, 244, 254** comprises a string of alphanumerical data defining a first set of data, the first set of data comprising a first data portion and a second data portion. Each machine coded image pattern **212** comprises a plurality of image defining elements which are distributed within a boundary to collectively represent a second set of data comprising a third data portion. The alignment guide comprises a plurality of alignment devices **276**. Descriptions herein in relation to the human readable data device, the machine coded image pattern, and the alignment guide are applicable.

In addition, another, or a second, human readable device "Brand" **280** is embedded in the pool of image defining elements that collectively define the machine coded image pattern. This human readable device is perceivable, and/or extractable by optical character recognition, even embedded in the machine coded image pattern and can form part of the first set of data. Alternatively, this human readable device can be provided solely as user perceivable information only.

The composite information bearing devices **210**, **220**, **230**, **240**, **250** of the example labels collectively form an aggregate of identification devices having a common or same machine coded image pattern **212** while each of the human readable data devices is unique or distinctive. Each unique or distinctive human readable data device includes an identification portion and a verification portion.

In the example labels of Figures 10A to 10E, the machine coded image pattern **212** represents a first portion of an identification code, the first 3 data symbols on the first human readable data device which is above the machine coded image pattern **212** represents a verification code, and the last 5 data symbols of the first human readable data device represents a second portion of the identification code.

The example labels of Figures 10A to 10E are an aggregate of labels each of which having a unique or distinctive identification code, and the identification codes are in a serial or sequential order as below:

| device | Identification code | Verification code |
| --- | --- | --- |
| 210 | 3FFFFFFF00001 | 142 |
| 220 | 3FFFFFFF00002 | 434 |
| 230 | 3FFFFFFF00003 | 667 |
| 240 | 3FFFFFFF00004 | 495 |
| 250 | 3FFFFFFF00005 | 205 |

The first portion of the identification codes ("3FFFFFFF") as represented by the machine coded image pattern **212** constitutes the most or more significant portion of the identification codes. The last 5 data symbols of the identification codes as represented by the second portion of the identification code constitutes the least or less significant portion of the identification codes.

When the second human readable device **280** forms part of the first set of data, the alphanumeric string of this second human readable device **280** or its representative value will form part of the identification code.

While various devices, processes, applications and apparatus have been described herein, it should be appreciated that they are examples to facilitate understanding and should not be used to restrict the scope of disclosure. Where example operations are described herein, it should be appreciated that the operations are only examples to illustrate application of the composite information bearing devices and are not intended to limit scope of disclosure.

Example human readable devices and example machine encoded image patterns have been provided herein to assist understanding of the disclosure and such examples are not intended to limit the scope of disclosure.

## Claims

1.    A composite information bearing device (130, 140, 150, 160, 170, 180, 190, 210, 220, 230, 240, 250) comprising an image pattern (132, 142, 152, 162, 172, 182, 192, 212) and a human readable data device (134, 144, 154, 164, 174, 184, 194, 214, 224, 234, 244, 254), wherein the image pattern is a non-human perceivable machine coded image pattern, wherein the human readable data device (134, 144, 154, 164, 174, 184, 194, 214, 224, 234, 244, 254) comprises a set of human readable data symbols representing a first set of data, the first set of data comprising a first data portion and a second data portion; wherein the image pattern represents a second set of data and comprises a third data portion; **characterized in that** said first data portion upon combination or concatenation with said third data portion, forms an identification code and the second data portion not forming part of said identification code forms a verification code, said verification code being for facilitating verification of the identification code and related to said identification code by a scheme of operation.

2.    A composite information bearing device according to Claim 1, wherein said image pattern (132, 142, 152, 162, 172, 182, 192, 212) is related to said third data portion by a scheme of steganography or a scheme of transform domain operation, wherein said scheme of steganography is operable to encode said third data portion by transforming said third data portion into a plurality of image defining elements, said image defining elements being distributed to collectively define said image pattern; and/or wherein said transform domain operation includes transform operation using Fourier Transform, Cosine Transform, Bessel Transform, or other transform domain techniques that are operable to transform a data point in one domain into a plurality of image defining elements to collectively define said image pattern in spatial domain.

3.    A composite information bearing device according to any preceding Claims, wherein said image pattern (132, 142, 152, 162, 172, 182, 192, 212) is represented or representable by N x M image defining elements, N and M being integers; and wherein said third data portion is recoverable by reversal operation of a scheme of steganography such as a scheme of transform domain operation, said scheme of steganography being operable to generate said image pattern through operation on said third data portion.

4.    A composite information bearing device according to any of the preceding Claims, wherein said third data portion is represented or is representable by a string of n binary data bits, and said image pattern is one of $2^n$ possible variations.

5. A composite information bearing device according to Claim 4, wherein said n binary data bits are presentable in a non-spatial domain plane upon reversal operation of a scheme of steganography operation that was used to encode said third data portion.

6. A composite information bearing device according to any preceding Claims, wherein the second data portions not forming part of said identification code is to define said verification code for verifying said identification code, and said verification code has a shorter data length than said identification code.

7. A composite information bearing device according to any of preceding Claims, wherein the first set of data comprises a string of alphanumeric data symbols separable into said first data portion and said second data portion, wherein said first data portion forms part of said identification code and said second data portion forms said verification code such as a check code, check digit or check sum; and/or wherein said human readable data device comprises a string of alphanumeric data symbols, and said scheme of operation includes a scheme of mathematical operation or a scheme of computational operation such as hashing through the use of a hash map; and/or wherein said human readable data device is superimposed on said image defining elements of image pattern, and superimposed human readable data device is human readable or readable by optical character recognition.

8. A composite information bearing device according to any preceding Claims, further comprising an alignment guide, wherein said alignment guide comprises positional and/or dimensional alignment devices that are arranged to facilitate complementary positional and/or dimensional alignment with a counterpart alignment guide on an image viewer of an image capturing apparatus, and/or the alignment devices are distributed around a periphery of said image pattern.

9. An aggregate of devices comprising a plurality of identification devices or a plurality of composite information bearing device according to Claim 8, wherein the identification device comprises a composite information bearing device according to any of the preceding claims and forms part of an article or is attached to a living object; and wherein the coded image pattern of the plurality of identification devices of said aggregate is the same and the human readable data devices of the individual identification devices are unique or distinctive to provide individual identification; and/or wherein the first data portions of the human readable data devices of said plurality of identification devices are in a serial or sequential order.

10. A method of identifying an identification device comprising a composite information bearing device (130, 140, 150, 160, 170, 180, 190, 210, 220, 230, 240, 250) according to any of the preceding claims, wherein the method comprises:-

   - obtaining an image of said composite information bearing device(130, 140, 150, 160, 170, 180, 190, 210, 220, 230, 240, 250),
   - processing said image of said composite information bearing device to obtain said second set of data,
   - forming said identification code and said verification code, and
   - determining relationship between said identification code and said verification code and provide outcome of determination.

11. A method according to Claim 10, wherein said method comprises reading of said human readable data device or part thereof by optical recognition; and/or comprises a user inputting said human readable data device or part thereof.

12. A method according to Claims 10 or 11, wherein said method comprises processor processing of said image pattern to obtain said second set of data.

13. An apparatus (1000) comprising an image acquisition device (1028), a processor (1020) to operate said image acquisition device (1028) to capture an image of a target identification device, and a display screen (1026) to display an image to be captured; wherein the target identification device comprises a composite information bearing device (130, 140, 150, 160, 170, 180, 190, 210, 220, 230, 240, 250) according to any of the preceding claims and the processor (1020) is to execute an application program to process a captured image of said composite information bearing device (130, 140, 150, 160, 170, 180, 190, 210, 220, 230, 240, 250) to reverse the scheme of operation to retrieve, extract and/or form said identification code and said verification code, and to provide an outcome of relationship determination between said identification code and said verification code.

14. An apparatus according to Claim 13, wherein the apparatus (1000) includes a user input interface to input said first data portion or part thereof, and/or said second data portion or part thereof.

**15.** An apparatus according to Claims 13 or 14, wherein the apparatus (1000) is to obtain said first set of data or part thereof by optical character recognition; and/or wherein the scheme of operation includes domain transform operations, such as Fourier Transform, Cosine transform, or Bessel Transform.

## Patentansprüche

**1.** Eine zusammengesetzte Informationen tragende Vorrichtung (130, 140, 150, 160, 170, 180, 190, 210, 220, 230, 240, 250) mit einem Bildmuster (132, 142, 152, 162, 172, 182, 192, 212) und einer menschenlesbaren Datenvorrichtung (134, 144, 154, 164, 174, 184, 194, 214, 224, 234, 244, 254), wobei es sich bei dem Bildmuster um ein von einem Menschen nicht wahrnehmbares, maschinencodiertes Bildmuster handelt, wobei die menschenlesbare Datenvorrichtung (134, 144, 154, 164, 174, 184, 194, 214, 224, 234, 244, 254) einen Satz menschenlesbarer Datensymbole umfasst, die einen ersten Datensatz darstellen, wobei der erste Datensatz einen ersten Datenteil und einen zweiten Datenteil umfasst; wobei das Bildmuster einen zweiten Datensatz darstellt und einen dritten Datenteil umfasst; **dadurch gekennzeichnet, dass** der erste Datenteil bei einer Kombination oder Verknüpfung mit dem dritten Datenteil einen Identifizierungscode bildet, und der zweite Datenteil, der keinen Teil des Identifizierungscodes bildet, einen Verifizierungscode bildet, wobei der Verifizierungscode dazu bestimmt ist, eine Verifizierung des Identifizierungscodes zu ermöglichen und durch ein Operationsschema mit dem Identifizierungscode in Bezug gesetzt wird.

**2.** Eine zusammengesetzte Informationen tragende Vorrichtung nach Anspruch 1, wobei das Bildmuster (132, 142, 152, 162, 172, 182, 192, 212) durch ein Steganografieschema oder ein Transformationsdomänenoperationsschema mit dem dritten Datenteil in Bezug gesetzt wird, wobei das Steganografieschema operabel ist, um den dritten Datenteil zu codieren, indem der dritte Datenteil in mehrere bilddefinierende Elemente transformiert wird, wobei die bilddefinierenden Elemente verteilt sind, um kollektiv das Bildmuster zu definieren; und/oder wobei die Transformationsdomänenoperation eine Transformationsoperation umfasst, die sich einer Fourier-Transformation, einer Kosinus-Transformation, einer Bessel-Transformation oder anderer Transformationsdomänentechniken bedient, die operabel sind, um einen Datenpunkt in einer Domäne in eine Vielzahl bilddefinierende Elemente zu transformieren, um kollektiv das Bildmuster in einer Raum-Domäne zu definieren.

**3.** Eine zusammengesetzte Informationen tragende Vorrichtung nach einem der vorhergehenden Ansprüche, wobei das Bildmuster (132, 142, 152, 162, 172, 182, 192, 212) durch N x M bilddefinierende Elemente dargestellt wird oder darstellbar ist, wobei N und M ganze Zahlen sind; und wobei der dritte Datenteil durch eine Umkehroperation eines Steganografieschemas wie etwa ein Transformationsdomänenoperationsschema wiederherstellbar ist, wobei das Steganografieschema operabel ist, um das Bildmuster durch eine Operation am dritten Datenteil zu generieren.

**4.** Eine zusammengesetzte Informationen tragende Vorrichtung nach einem der vorhergehenden Ansprüche, wobei der dritte Datenteil durch eine Kette von n binären Datenbits dargestellt wird oder darstellbar ist, und das Bildmuster eine von $2^n$ möglichen Varianten ist.

**5.** Eine zusammengesetzte Informationen tragende Vorrichtung nach Anspruch 4, wobei die n binären Datenbits bei einer Umkehroperation eines Steganografieoperationsschemas, das zum Codieren des dritten Datenteils verwendet wurde, in einer nichträumlichen Domänenebene darstellbar sind.

**6.** Eine zusammengesetzte Informationen tragende Vorrichtung nach einem der vorhergehenden Ansprüche, wobei die zweiten Datenteile, die keinen Teil des Identifizierungscodes bilden, dazu bestimmt sind, den Verifizierungscode zum Verifizieren des Identifizierungscodes zu definieren, und der Verifizierungscode eine kürzere Datenlänge hat als der Identifizierungscode.

**7.** Eine zusammengesetzte Informationen tragende Vorrichtung nach einem der vorhergehenden Ansprüche, wobei der erste Datensatz eine Kette von alphanumerischen Datensymbolen umfasst, die in den ersten Datenteil und den zweiten Datenteil aufteilbar sind, wobei der erste Datenteil einen Teil des Identifizierungscodes bildet, und der zweite Datenteil den Verifizierungscode, wie etwa einen Prüfcode, eine Prüfziffer oder eine Prüfsumme bildet; und/oder wobei die menschenlesbare Datenvorrichtung eine Kette von alphanumerischen Datensymbolen umfasst, und das Operationsschema ein mathematisches Operationsschema oder ein rechnerisches Operationsschema, wie etwa eine Hash-Codierung durch die Verwendung einer Hash-Abbildung umfasst; und/oder wobei die menschenlesbare Datenvorrichtung den bilddefinierende Elementen des Bildmusters überlagert ist und die überlagerte menschenlesbare Datenvorrichtung menschenlesbar oder durch optische Zeichenerkennung lesbar ist.

**8.** Eine zusammengesetzte Informationen tragende Vorrichtung nach einem der vorhergehenden Ansprüche, darüber hinaus eine Ausrichtungsführung umfassend, wobei die Ausrichtungsführung Positions- und/oder Dimensionsausrichtungsvorrichtungen umfasst, die dazu eingerichtet sind, eine komplementäre Positions- und/oder Dimensionsausrichtung mit einem Ausrichtungsführungspendant auf einer Bildanzeige eines Bildaufnahmeapparats zu ermöglichen, und/oder die Ausrichtungsvorrichtungen um einen Umfang des Bildmusters herum verteilt sind.

**9.** Aggregat aus Vorrichtungen mit mehreren Identifizierungsvorrichtungen oder mehreren zusammengesetzte Informationen tragenden Vorrichtungen nach Anspruch 8, wobei die Identifizierungsvorrichtung eine zusammengesetzte Informationen tragende Vorrichtung nach einem der vorhergehenden Ansprüche umfasst und einen Teil eines Artikels bildet oder an einem lebenden Objekt befestigt ist, und wobei das codierte Bildmuster der mehreren Identifizierungsvorrichtungen des Aggregats dasselbe ist, und die menschenlesbaren Datenvorrichtungen der einzelnen Identifizierungsvorrichtungen einzigartig oder unverwechselbar sind, um eine individuelle Identifizierung bereitzustellen; and/oder wobei sich die ersten Datenteile der menschenlesbaren Datenvorrichtungen der mehrere Identifizierungsvorrichtungen in einer seriellen oder sequenziellen Reihenfolge befinden.

**10.** Verfahren zum Identifizieren einer Identifizierungsvorrichtung, die eine zusammengesetzte Informationen tragende Vorrichtung (130, 140, 150, 160, 170, 180, 190, 210, 220, 230, 240, 250) nach einem der vorhergehenden Ansprüche aufweist, wobei das Verfahren umfasst:

- Aufnehmen eines Bilds der die zusammengesetzten Informationen tragenden Vorrichtung (130, 140, 150, 160, 170, 180, 190, 210, 220, 230, 240, 250),
- Verarbeiten des Bilds der die zusammengesetzten Informationen tragenden Vorrichtung, um den zweiten Datensatz zu erhalten,
- Herstellen des Identifizierungscodes und des Verifizierungscodes, und
- Bestimmen eines Verhältnisses zwischen dem Identifizierungscode und dem Verifizierungscode und Bereitstellen des Bestimmungsergebnisses.

**11.** Verfahren nach Anspruch 10, wobei das Verfahren umfasst, die menschenlesbare Datenvorrichtung oder einen Teil davon durch optische Erkennung zu lesen; und/oder umfasst, dass ein Nutzer die menschenlesbare Datenvorrichtung oder einen Teil davon eingibt.

**12.** Verfahren nach Anspruch 10 oder 11, wobei das Verfahren umfasst, dass ein Prozessor das Bildmuster verarbeitet, um den zweiten Datensatz zu erhalten.

**13.** Apparat (1000) mit einer Bildaufnahmevorrichtung (1028), einem Prozessor (1020) zum Betätigen der Bildaufnahmevorrichtung (1028), um ein Bild einer Zielidentifizierungsvorrichtung aufzunehmen, und einem Anzeigebildschirm (1026) zum Anzeigen eines aufzunehmenden Bilds; wobei die Zielidentifizierungsvorrichtung eine zusammengesetzte Informationen tragende Vorrichtung (130, 140, 150, 160, 170, 180, 190, 210, 220, 230, 240, 250) nach einem der vorhergehenden Ansprüche umfasst, und der Prozessor (1020) dazu bestimmt ist, ein Anwendungsprogramm auszuführen, um ein aufgenommenes Bild der zusammengesetzte Informationen tragenden Vorrichtung (130, 140, 150, 160, 170, 180, 190, 210, 220, 230, 240, 250) zur Umkehrung des Operationsschemas zu verarbeiten, um den Identifizierungscode und den Verifizierungscode abzurufen, zu extrahieren und/oder zu bilden und ein Ergebnis einer Verhältnisbestimmung zwischen dem Identifizierungscode und dem Verifizierungscode bereitzustellen.

**14.** Apparat nach Anspruch 13, wobei der Apparat (1000) eine Nutzereingabeschnittstelle zur Eingabe des ersten Datenteils oder eines Teils davon und/oder des zweiten Datenteils oder eines Teils davon umfasst.

**15.** Apparat nach Anspruch 13 oder 14, wobei der Apparat (1000) dazu bestimmt ist, den ersten Datensatz oder einen Teil davon durch optische Zeichenerkennung zu erhalten; und/oder wobei das Operationsschema Domänentransformationsoperationen, wie etwa eine Fourier-Transformation, eine Kosinus-Transformation oder eine Bessel-Transformation umfasst.

**Revendications**

**1.** Dispositif de stockage d'informations composites (130, 140, 150, 160, 170, 180, 190, 210, 220, 230, 240, 250) comprenant un motif d'image (132, 142, 152, 162, 172, 182, 192, 212) et un dispositif de données lisible par un humain (134, 144, 154, 164, 174, 184, 194, 214, 224, 234, 244, 254), dans lequel le motif d'image est un motif d'image codé par une machine non perceptible par un humain, le dispositif de données lisible par un humain (134, 144, 154, 164, 174, 184, 194, 214, 224, 234, 244, 254) comprenant un ensemble de symboles de données lisibles par un humain représentant un premier ensemble de données, le premier ensemble de données comprenant une première portion de données et une deuxième portion de données ; le motif d'image représentant un deuxième ensemble de données et comprenant une troisième portion de données, **caractérisé en ce que** ladite première portion de données forme, lors de la combinaison ou de la concaténation avec ladite troisième portion de données, un code d'identification et la deuxième portion de données ne faisant pas partie dudit code d'identification forme un code de vérification, ledit code de vérification étant conçu pour faciliter la vérification du code d'identification et étant lié audit code d'identification par un programme d'opération.

2. Dispositif de stockage d'informations composites selon la revendication 1, dans lequel ledit motif d'image (132, 142, 152, 162, 172, 182, 192, 212) est lié à ladite troisième portion de données par un programme de stéganographie ou à un programme d'opération de domaine de transformation, ledit programme de stéganographie pouvant être utilisé pour encoder ladite troisième portion de données en transformant ladite troisième portion de données en une pluralité d'éléments définissant une image, lesdits éléments définissant une image étant distribués afin de définir collectivement ledit motif d'image ; et/ou dans lequel ladite opération de domaine de transformation comprend une opération de transformation utilisant une transformée de Fourier, une transformée en cosinus, une transformée de Bessel ou d'autres techniques de domaine de transformation qui peuvent être utilisées pour transformer un point de données dans un domaine en une pluralité d'éléments définissant une image afin de définir collectivement ledit motif d'image dans le domaine spatial.

3. Dispositif de stockage d'informations composites selon l'une des revendications précédentes, dans lequel ledit motif d'image (132, 142, 152, 162, 172, 182, 192, 212) est représenté ou peut être représenté par N x M éléments définissant une image, N et M étant des entiers ; et dans lequel ladite troisième portion de données peut être récupérée par une opération inverse d'un programme de stéganographie tel qu'un programme d'opération de domaine de transformation, ledit programme de stéganographie pouvant être utilisé pour générer ledit motif d'image par l'intermédiaire d'une opération sur ladite troisième portion de données.

4. Dispositif de stockage d'informations composites selon l'une des revendications précédentes, dans lequel ladite troisième portion de données est représentée ou peut être représentée par une chaîne de n bits de données binaires et ledit motif d'image est un parmi $2^n$ variations possibles.

5. Dispositif de stockage d'informations composites selon la revendication 4, dans lequel lesdits n bits de données binaires peuvent être présentés dans un plan de domaine non spatial lors d'une opération inverse d'un programme d'opération de stéganographie qui a été utilisé pour encoder ladite troisième portion de données.

6. Dispositif de stockage d'informations composites selon l'une des revendications précédentes, dans lequel ladite deuxième portion de données ne faisant pas partie dudit code d'identification est conçue pour définir ledit code de vérification pour la vérification dudit cade d'identification et ledit code de vérification présentant une longueur de données inférieure audit code d'identification.

7. Dispositif de stockage d'informations composites selon l'une des revendications précédentes, dans lequel le premier ensemble de données comprend une chaîne de symboles de données alphanumériques pouvant être séparés en ladite première portion de données et ladite deuxième portion de données, ladite première portion de données faisant partie dudit code d'identification et ladite deuxième portion de données formant ledit code de vérification tel qu'un code de contrôle, un digit de contrôle ou une somme de contrôle ; et/ou ledit dispositif de données lisible par un humain comprenant une chaîne de symboles de données alphanumériques et ledit programme d'opération comprenant un programme d'opération mathématique ou un programme d'opération de calcul tel qu'un hachage à l'aide d'une carte de hachage ; et/ou ledit dispositif de données lisible par un humain étant superposé sur lesdits éléments définissant une image du motif d'image et le dispositif de données lisible par un humain étant lisible par un humain ou lisible par une reconnaissance optique de caractères.

8. Dispositif de stockage d'informations composites selon l'une des revendications précédentes, comprenant en outre un guide d'alignement, ledit guide d'alignement comprenant des dispositifs d'alignement positionnels et/ou dimensionnels qui sont conçus pour faciliter un alignement positionnel et/ou dimensionnel complémentaire avec un guide d'alignement correspondant sur un visualiseur d'image d'un appareil de capture d'images et/ou les dispositifs d'alignement étant distribués autour d'une périphérie dudit motif d'image.

**9.** Groupe de dispositifs comprenant une pluralité de dispositifs d'identification ou une pluralité de dispositifs de stockage d'informations composites selon la revendication 8, dans lequel le dispositif d'identification comprend un dispositif de stockage d'informations composites selon l'une des revendications précédentes et fait partie d'un article ou est fixé à un objet vivant ; et dans lequel le motif d'image codé de la pluralité de dispositifs d'identification dudit groupe est le même et les dispositifs de données lisibles par un humain des dispositifs d'identification individuels sont uniques ou distincts pour permettre une identification individuelle ; et/ou dans lequel les premières portions de données des dispositifs de données lisibles par un humain de ladite pluralité de dispositifs d'identification sont disposées dans un ordre sériel ou séquentiel.

**10.** Procédé d'identification d'un dispositif d'identification comprenant un dispositif de stockage d'informations composites (130, 140, 150, 160, 170, 180, 190, 210, 220, 230, 240, 250) selon l'une des revendications précédentes, ce procédé comprenant :

- l'obtention d'une image dudit dispositif de stockage d'informations composites (130, 140, 150, 160, 170, 180, 190, 210, 220, 230, 240, 250),
- le traitement de ladite image dudit dispositif de stockage d'informations composites afin d'obtenir ledit deuxième ensemble de données,
- la formation dudit code d'identification et dudit code de vérification, et
- la détermination d'une relation entre ledit code d'identification et ledit code de vérification et la fourniture d'un résultat de cette détermination.

**11.** Procédé selon la revendication 10, dans lequel ledit procédé comprend la lecture dudit dispositif de données lisible par un humain ou d'une partie de celui-ci par reconnaissance optique ; et/ou comprend une entrée d'utilisateur dans ledit dispositif de données lisible par un humain ou une partie de celui-ci.

**12.** Procédé selon les revendications 10 ou 11, dans lequel ledit procédé comprend un processeur traitant ledit motif d'image afin d'obtenir ledit deuxième ensemble de données.

**13.** Appareil (1000) comprenant un dispositif d'acquisition d'image (1028), un processeur (1020) pour faire fonctionner ledit dispositif d'acquisition d'image (1028) afin de capturer une image d'un dispositif d'identification cible et un écran d'affichage (1026) pour afficher une image à capturer ; le dispositif d'identification cible comprenant un dispositif de stockage d'informations composites (130, 140, 150, 160, 170, 180, 190, 210, 220, 230, 240, 250) selon l'une des revendications précédentes et le processeur (1020) étant conçu pour exécuter un programme d'application pour traiter une image capturée dudit dispositif de stockage d'informations composites (130, 140, 150, 160, 170, 180, 190, 210, 220, 230, 240, 250) afin d'inverser le programme d'opération pour récupérer, extraire et/ou former ledit code d'identification et ledit code de vérification et pour fournir un résultat de la détermination de la relation entre ledit code d'identification et ledit code de vérification.

**14.** Appareil selon la revendication 13, dans lequel l'appareil (1000) comprend une interface d'entrée utilisateur pour entrer ladite première portion de données ou une partie de celle-ci, et/ou ladite deuxième portion de données ou une partie de celle-ci.

**15.** Appareil selon les revendications 13 ou 14, dans lequel l'appareil (1000) est conçu pour obtenir ledit premier ensemble de données ou une partie de celui-ci par reconnaissance optique de caractères ; et/ou dans lequel le programme d'opération comprend des opérations de domaine de transformation, telles qu'une transformée de Fourier, une transformée en cosinus ou une transformée de Bessel.

114

## 10101 A234

110 { } ← 112

Fig. 1A

124

## 10101 A235

120 { } ← 122

Fig. 1B

134

## A234 (1)

130 { } ← 132

Fig. 1C

144

## A235 (9)

140 { } ← 142

Fig. 1D

154

## A234 (5)

150 { } ← 152

Fig. 1E

164

## A235 (3)

160 { } ← 162

Fig. 1F

Fig. 2A

Fig. 2B

Fig. 3B

Fig. 3A

Fig. 4

Fig. 5A

Fig. 5B

Fig. 6A

Fig. 8D

Fig. 8E

Fig. 6B

Fig. 7A

Fig. 7C

Fig. 7B

Fig. 8A

Scan

Fig. 8B

Please confirm the 9-digit numbers above the mark and make corresponding changes if necessary.

Back    OK

Fig. 8C

Fig. 9A

Fig. 9B

Fig. 9C

Fig. 9D

Fig. 9E

Fig. 10A

Fig. 10B

Fig. 10C

Fig. 10D

Fig. 10E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102129589